# EUROPÄISCHE PATENTSCHRIFT

(11) **EP 2 321 437 B1**
(45) Veröffentlichungstag und Bekanntmachung des Hinweises auf die Patenterteilung: **13.06.2012**
(21) Anmeldenummer: 09781899.1
(22) Anmeldetag: 17.08.2009
(51) Int. Cl.: C22B 1/24, C22B 1/242, C21B 13/00, C22B 5/14

(54) **VERFAHREN ZUR HERSTELLUNG VON AGGLOMERATEN AUS FEINKÖRNIGEN EISENTRÄGERN**
PROCESS FOR PRODUCING AGGLOMERATES OF FINELY PARTICULATE IRON CARRIERS
PROCÉDÉ DE PRODUCTION D'AGGLOMÉRATS FORMÉS DE PORTEURS DE FER À GRAINS FINS

(30) Priorität: 11.09.2008 AT 14192008
(43) Veröffentlichungstag der Anmeldung: 18.05.2011
(73) Patentinhaber: Siemens VAI Metals Technologies GmbH, 4031 Linz (AT)
(72) Erfinder: HECKMANN, Hado, 4020 Linz (AT); BOEHM, Christian, 4600 Thalheim (AT); SCHENK, Johannes Leopold, 4040 Linz (AT); STIASNY, Hans Herbert, 4020 Linz (AT)
(74) Vertreter: Maier, Daniel Oliver
(86) Internationale Anmeldenummer: PCT/EP2009/060609
(87) Internationale Veröffentlichungsnummer: WO 2010/028932

(56) Entgegenhaltungen:
- WO-A-2005/103307
- CN-A- 101 070 558
- GB-A- 1 364 150
- GB-A- 1 374 026
- GB-A- 1 485 418
- JP-A- 3 036 219
- JP-A- 54 062 913
- JP-A- 59 173 229
- RU-C1- 2 151 205
- US-A- 4 701 214
- DATABASE WPI Week 200222 Thomson Scientific, London, GB; AN 2002-169251 XP002561555 & KR 2001 089 927 A (KOREA KUMHO PETROCHEMICAL CO LTD) 17. Oktober 2001 (2001-10-17)

## Beschreibung

Die Erfindung betrifft ein Verfahren zur Herstellung von Agglomeraten aus feinkörnigen Eisenträgern, insbesondere Eisenerzen und/oder eisenhältigen Stäuben und/oder Schlämmen, und zumindest einem Binder als Einsatzstoff für einen thermischen Prozess, insbesondere einem metallurgischen Prozess, wobei die Eisenträger mit dem Binder und gegebenenfalls Zusatzstoffen gemischt und agglomeriert werden.

Die Erfindung betrifft weiters ein Verfahren zur Herstellung von flüssigem Roheisen oder flüssigen Stahlvorprodukten aus Einsatzstoffen, insbesondere Eisenerzen, gegebenenfalls Zusatzstoffen und Agglomeraten, gemäß einem der Ansprüche 1 bis 17, wobei die Einsatzstoffe in einer Reduktionszone einer weitgehenden Reduktion unterzogen und dann einer Schmelzzone oder einem Schmelzaggregat, insbesondere einem Einschmelzvergaser, zum Erschmelzen unter Zusatz von Kohlenstoffträgern und sauerstoffhältigem Gas unter Ausbildung eines Festbettes, zugeführt werden, wobei ein Reduktionsgas gebildet und in die Reduktionszone eingeleitet wird.

Aus der WO 2005/103307A ist ein Verfahren zur Herstellung von zweischichtigen Agglomeraten zu entnehmen, wobei die äußere Schicht einen Brennstoff als Additiv aufweist.

Aus der JP 3-36219 A offenbart ein Verfahren zur Herstellung von zweischichtigen Pellets mit ausreichender Festigkeit und geringer Staubneigung. Die äußere Pelletschicht weist höhere Bentonitanteile als die innere Pelletschicht auf.

Ein Verfahren zur Herstellung von Chromerz-Pellets ist der JP 54-62913 zu entnehmen. Hier wird zur Erhöhung der Festigkeit der Pellets vorgeschlagen diese mit einer Schicht aus Ferronickel-Schlackenpulver zu beschichten.

US 4,701,214 A offenbart ein Verfahren zur Herstellung von Roheisen aus Feineisenerz. Dazu wird das Feineisenerz agglomeriert, in einem Drehherdofen vorreduziert und in einem Schmelzreduktionsaggregat gemeinsam mit Kohlenstoffträgern und Sauerstoff zu Roheisen erschmolzen. Ein im Schmelzreduktionsaggregat gebildetes CO- und H₂-hältiges Reduktionsgas wird dem Drehherdofen zur Reduktion der Pellets zugeführt.

Es ist aus dem Stand der Technik bekannt, dass Feinerze in Reduktionszonen zunächst reduziert und dann in einer Schmelzzone zu Roheisen erschmolzen werden. Derartige Prozesse arbeiten in einem Arbeitsbereich, der z.B. durch die Korngröße der Einsatzstoffe charakterisiert wird. Grundsätzlich sind kleine Korngrößen mit der Problematik verbunden, dass es dabei im Prozess zu erheblichen Staubentwicklungen kommt bzw. dass kleine Partikel mit dem Prozessgas aus den Prozessaggregaten ausgetragen werden können.

Es ist daher eine Aufgabe der Erfindung den Arbeitsbereich eines Verfahrens zur Herstellung von flüssigem Roheisen dahingehend zu erweitern, dass auch Feinsterze mit sehr geringen Korngrößen verarbeitet werden können, wobei die Entstehung von Stäuben bei der Verarbeitung der Feinsterze vermieden werden kann.

Diese Aufgabe wird durch das erfindungsgemäße Verfahren nach Anspruch 1 gelöst.

Durch das erfindungsgemäße Verfahren können auch sehr feinkörnige Eisenträger, wie z.B. Eisenerze und/oder Eisenerzkonzentrate und/oder eisenhältige Stäube und/oder Schlämme verarbeitet werden. Dabei wird verhindert bzw. erschwert, dass infolge der vor und bei der Verarbeitung in einem Reduktionsaggregat auf Agglomerate einwirkenden mechanischen Belastungen wiederum feinteilchenförmige, insbesondere staubförmige Anteile entstehen. Diese Beanspruchungen entstehen durch Druck, Reibung, Scherung und Prall, zumeist als Folge einer Wechselwirkung zwischen den Agglomeraten.

Zur Lösung dieser Problematik werden die zusammen mit einem Binder gemischten feinkörnigen Eisenträger agglomeriert und anschließend derart erhitzt, dass der Binder im Bereich der Oberfläche der Agglomerate gehärtet wird. Durch das Erhitzen kann das Härten des Binders gezielt gesteuert und damit können die mechanischen Eigenschaften, insbesondere die Festigkeit an der Oberfläche der Agglomerate, eingestellt werden. Die Erhitzung kann dabei in einer Behandlungseinrichtung außerhalb eines metallurgischen Prozesses, insbesondere während einer Trocknung oder unmittelbar an eine Trocknung anschließend, oder innerhalb der ersten Stufe eines metallurgischen Prozesses erfolgen.

In letzterem Falle können alternativ oder ergänzend auch Binder verwendet werden, die bereits bei niedrigen, insbesondere ambienten Temperaturen eine Festigkeitsentwicklung zeigen, welche ausreichend ist, um die Agglomerate ohne zusätzliche Erhitzung weitestgehend unbeschadet durch mechanische Beanspruchungen in die erste Stufe eines metallurgischen Prozesses einbringen zu können, wo die für die weitere Beanspruchung erforderliche Aushärtung durch Erhitzen erfolgt. Die Umgebungstemperatur ist dabei ausreichend für eine Aushärtung des Binders.

In der Folge ist es möglich die Agglomerate in einem metallurgischen Prozess, wie z.B. einem Reduktionsverfahren oder einem Schmelz-Reduktionsverfahren, zu verarbeiten, wobei der entstehende feinteilchenförmige Anteil zumindest deutlich verringert oder nahezu vermieden werden kann. Vorteilhaft ist dabei vor allem, dass die Agglomerate nicht voll durchgehärtet werden müssen und somit das Erhitzen zumindest verkürzt und der Energieaufwand erheblich verringert werden kann. Bei Bedarf können die Agglomerate aber auch vollkommen durchgehärtet werden, also nicht nur im Randbereich.

Gemäß einer vorteilhaften Ausgestaltung des erfindungsgemäßen Verfahrens werden die Agglomerate in zumindest einem weiteren Agglomerationsschritt mit einer Schicht, bestehend aus Eisenträgern und zumindest einem Binder, überzogen. Durch die zusätzliche Schicht ist es möglich, Agglomerate herzustellen, die außen einen anderen Anteil an Binder oder einen andersartigen Binder als im Kern aufweisen oder auch aus einem anderen feinkörnigen Eisenträger bestehen als innen. Dies ermöglicht, dass die Agglomerate für einen metallurgischen Prozess angepasst werden können, wobei vor allem mehrstufigen metallurgischen Prozessen Rechnung getragen werden kann. Beispielsweise kann die zusätzliche Schicht derart gewählt werden, dass in einem ersten Schritt eines metallurgischen Prozesses bevorzugt diese Schicht umgesetzt wird.

Nach einer weiteren vorteilhaften Ausgestaltung des erfindungsgemäßen Verfahrens werden die Agglomerate nach dem zumindest einen weiteren Agglomerationsschritt derart erhitzt, dass der Binder der äußersten oder der äußeren Schichten aushärtet. Das Erhitzen kann derart gesteuert werden, dass nur in einem bestimmten Randbereich der Agglomerate ein Aushärten erfolgt. Der ausgehärtete Randbereich stellt einen ausreichenden Schutz der Agglomerate gegen mechanische Beanspruchungen während des Handlings vor Chargierung in einen metallurgischen Prozess, sowie in der ersten Stufe eines metallurgischen Prozesses dar. Im weiteren Ablauf eines metallurgischen Prozesses, insbesondere einer Erhitzungs- und Reduktionsstufe, entwickelt auch der Kernbereich der Agglomerate seine Festigkeit. Infolge der Überführung der Eisenoxide in metallisches Eisen durch Reduktion (Metallisierung) ausgehend von der Randzone bis in den Kern hinein, nehmen die Agglomerate eine maximale Festigkeit an und sind praktisch bis zum Erreichen einer Erweichungstemperatur durch normale mechanische Beanspruchungen unzerstörbar. Vorteilhaft ist dabei insbesondere, dass die mechanischen Eigenschaften aber auch die Zusammensetzung in der oder den äußeren Schichten auf den metallurgischen Prozess abgestimmt werden können. So ist es möglich, dass in der äußeren Schicht der Agglomerate eine Zusammensetzung der feinteilchenförmigen Einsatzstoffe derart gewählt wird, dass dort eine Reduktion bis hin zur Metallisierung schon während der Erhitzung in einer Atmosphäre von oxidierend wirkenden Gasen von statten geht, wobei metallisches Eisen oder dessen Vorprodukt Wüstit entsteht. Dadurch wird die Ausbildung eines stabilen metallischen Mantels um den noch oxidischen Kern eines Agglomerates gegenüber der üblichen Reduktion mit Gasen (indirekte Reduktion) beschleunigt.

Eine geeignete Ausgestaltung des erfindungsgemäßen Verfahrens sieht vor, dass die Agglomerate vor dem weiteren Agglomerationsschritt gehärtet werden. Damit wird eine Härtung auch im Kernbereich der Agglomerate erzielt, wodurch diese an zusätzlicher Festigkeit gewinnen. Wegen der Ausbildung eines Temperaturprofils mit von außen nach innen abnehmenden Temperaturen müssten bei Härtung über die äußere Schale der Agglomerate höhere Härtetemperaturen oder längere Verweilzeiten in einer Härtungszone in Kauf genommen werden, um eine vergleichbare Härte dieses Agglomerates, insbesondere seines Kerns zu erzielen.

Gemäß einer besonderen Ausgestaltung des erfindungsgemäßen Verfahrens weist der Binder der äußersten Schicht oder der äußeren Schichten eine geringere Aushärtetemperatur als der Binder im Inneren der Agglomerate auf. In diesem Falle können Agglomerate hergestellt werden, die in der äußeren bzw. den äußeren Schichten bereits bei niedrigen, insbesondere ambienten Temperaturen eine Festigkeitsentwicklung zeigen, welche ausreichend ist, um die Agglomerate ohne vorausgehende Erhitzung weitestgehend unbeschadet durch mechanische Beanspruchungen in die erste Stufe eines metallurgischen Prozesses einbringen zu können, wo die für die weitere Beanspruchung erforderliche Aushärtung durch Erhitzen erfolgt. Damit kann das Erhitzen der Agglomerate nach dem Agglomerieren auf das Aushärten der äußersten oder der äußeren Schicht beschränkt werden, sodass die nötige Zeit für das Aushärten verringert und der Energieaufwand reduziert werden kann. Die Auswahl des Binders im Kern der Agglomerate erfolgt hingegen unter Kostengesichtspunkten oder auch unter dem Gesichtspunkt der Reduktionsbeständigkeit, also dem Widerstandsvermögen der Agglomerate gegen Kornzerfall in einer reduzierenden, heißen Gasatmosphäre bei gleichzeitiger Einwirkung mechanischer Beanspruchungen unter gegebenen Prozessbedingungen.

Nach einer weiteren vorteilhaften Ausgestaltung des erfindungsgemäßen Verfahrens werden die Agglomerate, insbesondere nach dem Aushärten, mit einer Beschichtung aus kohlenstoffhältigen Stoffen, Kalk, insbesondere Branntkalk, oder Stäuben aus der Agglomeration überzogen. Durch den Überzug ist es möglich, Prozesshilfsstoffe direkt auf den Agglomeraten vorzusehen, sodass z.B. dem Zusammenbacken von Agglomeraten (Sticking) während des Reduktionsprozesses vorgebeugt werden kann. Weiters kann z.B. durch eine Beschichtung von Grünagglomeraten deren Aneinanderhaften bei der Lagerung in Schüttungen verhindert werden. Hierzu werden pulvrige, vorzugsweise eisen- und/oder kohlenstoffhältige, Substanzen ohne Befeuchtung und Bindemittelzugabe in einem finalen Agglomerationsschritt als äußere Hülle auf die Agglomerate aufgetragen.

Gemäß einer geeigneten Ausgestaltung des erfindungsgemäßen Verfahrens werden die Eisenträger und der Binder und gegebenenfalls Zusatzstoffe vor dem Agglomerieren zur Verbesserung des Bindevermögens geknetet. Durch das Kneten kann je nach Art des verwendeten Binders das Quellen des Binders gefördert, eine für den folgenden Agglomerationsschritt gewünschte Konsistenz des Einsatzgutes eingestellt oder aber die Verweilzeiten dargestellt werden, die für im Einsatzgut ablaufenden chemischen Reaktionen notwendig sind.

Eine vorteilhafte Ausgestaltung des erfindungsgemäßen Verfahrens sieht vor, dass die Eisenträger neben feinkörnigen Eisenerzen und/oder Stäuben und/oder Schlämmen auch körnige Anteile, insbesondere rezyklierte Agglomerate, aufweisen, mit einer Korngröße von 0,1 bis 3mm, insbesondere 0,5 bis 1,5mm, wobei die körnigen Anteile als Keimbildner für die Bildung der Agglomerate dienen. Durch den Einsatz von Keimbildnern kann im Falle der Ausprägung der Agglomeration als Granulation oder Pelletierung die Agglomeratbildung beschleunigt und eine gleichmäßigere Agglomeratgröße und -form erzielt werden. Vorteilhaft ist es dabei rezyklierte Agglomerate oder auch Bruchstücke von rezyklierten Agglomeraten, die bei der Verwendung oder Verarbeitung der Agglomerate anfallen zu nutzen. Die Größe des körnigen Anteils kann auch gezielt durch Brechen, Sieben und sonstige geeignete Maßnahmen eingestellt werden. Insbesondere im Falle einer Agglomeration unter Verwendung von Pressen (Strangpressen, Kompaktierung, Brikettierung) kann es sinnvoll sein, nicht nur Partikel verschiedener Größe sondern auch unterschiedlicher Form miteinander zu vermischen. So werden z. B. durch Zumischen von Eisenzunder, der eine blättrige Form aufweist, zu feinkörnigen Eisenerzen oder eisenhältigen Schlämmen die Kalt- und die Warmfestigkeiten der daraus hergestellten Agglomerate verbessert.

Erfindungsgemäß werden die Agglomerate, insbesondere während oder nach der Agglomeration, getrocknet, insbesondere durch thermisches Trocknen und/oder Lagerung an der Luft.

Gemäß einer besonderen Ausgestaltung des erfindungsgemäßen Verfahrens kann aber auch eine mechanische Entwässerung vor oder während der Agglomeration, insbesondere eine mechanische Entwässerung während einer Pressformgebung, erfolgen.

Durch das mechanische Entwässern kann die Trocknungszeit und auch die Vorwärmdauer im metallurgischen Prozess verringert werden. Die Methoden zur Reduzierung der Feuchte können dabei nach Bedarf gewählt werden.

Nach einer vorteilhaften Ausgestaltung des erfindungsgemäßen Verfahrens werden die Agglomerate durch Granulieren oder Pelletieren hergestellt. Die Vorteile des Granulierens/Pelletierens gegenüber dem Kompaktieren/Brikettieren liegen in einem geringeren Equipmentaufwand bzw. Equipmentverschleiß und in einem geringeren Bindemittelbedarf. Auf der anderen Seite verlangen Verfahren zum Granulieren/Pelletieren ein feines Korn des Aufgabegutes, so dass gegebenenfalls Einsatzstoffe durch Mahlung für den eigentlichen Agglomerationsprozess erst aufbereitet werden müssen. Eisenerzkonzentrate, welche z.B. mittels Flotationsverfahren gewonnen werden, sowie eisenhältige Hüttenstäube und Schlamme von Schmelzreduktionsverfahren wie Corex^{®} oder Finex^{®} können in der Regel jedoch aufgrund ihrer feinen Körnung ohne zusätzlichen Mahlaufwand durch Granulieren/Pelletieren agglomeriert werden. Unter Umständen kann es jedoch vorteilhaft sein die Agglomeration unter Pressung bzw. Verdichtung des Gutes, insbesondere durch Kompaktieren/Brikettieren durchzuführen, wenn diese Verdichtung zur Einstellung erhöhter Festigkeiten der Agglomerate erwünscht ist und der sich aus der Verdichtung ergebende Nachteil einer verminderten Reduktionskinetik dem gegenüber zurücktritt.

Besonders vorteilhaft werden durch das erfindungsgemäße Verfahren Stäube und/oder Schlämme verarbeitet, welche eisen- und/oder kohlenstoffhältige Reststoffe aus der Stahlproduktion oder feingemahlene Kohlenstoffträger, insbesondere Anthrazit, Koks oder Petrolkoks, sind. Damit ist es möglich, auch die in ultrafeinen Reststoffen, wie Stäuben oder Schlämmen, enthaltenen Wertstoffe für einen metallurgischen Prozess zu nutzen, ohne dadurch Nachteile für den Prozessablauf in Kauf nehmen zu müssen.

Erfindungsgemäß sind die Eisenträger Sintererz, Erzkonzentrat, Unterkorn von Eisenerz, Rückgut oder Stäube aus einer Agglomeration. Diese Wertstoffe zeichnen sich durch hohe Eisenanteile aus, konnten aber bisher nur unter Nachteilen, wie z.B. hoher Staubentwicklung oder Staubanteilen im Prozessgas eines metallurgischen Verfahrens verwendet oder aber nur mit hohem Energieaufwand in eine nutzbare Form überführt werden. Als Rückgut einer Agglomeration werden wie Unterkorn der Agglomerate, Bruchstücke von Agglomeraten oder Agglomerate unzureichender Festigkeit oder Form verstanden. Stäube fallen im Rahmen einer Agglomeration und einer zugehörigen Aufbereitung, insbesondere bei Körnungs- und Trocknungs-/ Härtungsstufen an.

Eine spezielle Ausgestaltung des erfindungsgemäßen Verfahrens sieht vor, dass die Zusatzstoffe metallurgische Zuschläge, insbesondere Kalk und/oder Dolomit und/oder kohlenstoffhältige Zusatzstoffe zur Einstellung zumindest teilweise selbstreduzierender Agglomerate, sind. Durch die Einbindung von Zuschlägen direkt in die Agglomerate kann zumindest teilweise auf einen gesonderten Zusatz von Zuschlägen in metallurgischen Prozessen verzichtet werden.

In einer weiteren speziellen Ausgestaltung des erfindungsgemäßen Verfahrens werden kohlenstoffhältige Stäube, Schlämme oder feingemahlene Kohlenstoffträger als Zusatzstoffe in die Agglomerate eingebunden, wodurch die Agglomerate unter den Bedingungen eines metallurgischen Prozesses zumindest teilweise selbstreduzierend ausgestaltet sind. Hierzu eignen sich insbesondere kohlenstoffhältige Stäube und Schlämme aus dem COREX^{®}- und dem FINEX^{®}-Prozess.

Zusatzstoffe können auch dazu dienen, die Härteentwicklung eines Binders zu beschleunigen. Insbesondere eignet sich Branntkalk als Zusatzstoff zur Beschleunigung der Härtung von Melasse-basierten Bindern.

Besonders vorteilhaft weisen die Agglomerate erfindungsgemäß einen Durchmesser von 0,5 bis 8 mm, insbesondere 3 bis 6 mm, auf. Dabei ist es möglich den Durchmesser der Agglomerate auf die Bedingungen im metallurgischen Verfahren anzupassen. Beispielsweise kann der Durchmesser in Abhängigkeit der Bedingungen in einer Wirbelschicht in einem metallurgischen Prozess gewählt werden.

Gemäß einer speziellen Ausgestaltung des erfindungsgemäßen Verfahrens werden als Binder anorganische Stoffe oder Mischungen davon, insbesondere gebrannter oder gelöschter Kalk oder Bentonite verwendet. Diese Binder können hohen Temperaturen und heißen oxidierenden oder auch reduzierenden Gase standhalten, sodass besonders stabile Agglomerate gebildet werden.

Gemäß einer weiteren speziellen Ausgestaltung des erfindungsgemäßen Verfahrens werden als Binder organische Stoffe oder Mischungen davon, insbesondere Melasse, Produkte aus Ablaugen der Zellstoffgewinnung, Stärken oder auch langkettige Polyelektrolyte auf der Basis von Zellulose verwendet. Damit können besonders hohe Festigkeiten der Agglomerate vor und während des metallurgischen Prozesses erzielt werden. Eine weitere vorteilhafte Ausgestaltung des Verfahrens sieht vor, dass die Eisenträger durch eine Klassierung in eine feinteilchenförmige und eine oder mehrere grobe Fraktionen getrennt und die feinteilchenförmige Fraktion, gegebenenfalls nach einer Trocknung, einer Agglomeration zugeführt wird, wobei die Klassierung in Form einer Sichtung oder einer Kombination aus Siebung und Sichtung erfolgt. Erforderlichenfalls kann der Klassierung eine Trocknung vorausgeschickt werden.

Gemäß einer speziellen Ausgestaltung des erfindungsgemäßen Verfahrens werden die eine oder mehreren groben Fraktionen, gegebenenfalls nach der Trocknung, zerkleinert, insbesondere feingemahlen, und einer Agglomeration zugeführt. Damit können auch gröbere Fraktionen zu Agglomeraten verarbeitet werden.

Die erfindungsgemäße Aufgabe wird auch durch das erfindungsgemäße Verfahren nach Anspruch 19 gelöst.

In einem Verfahren zur Herstellung von flüssigem Roheisen oder flüssigen Stahlvorprodukten aus Einsatzstoffen, insbesondere Eisenerzen, gegebenenfalls Zusatzstoffen und den erfindungsgemäßen Agglomeraten, werden die Einsatzstoffe in einer Reduktionszone einer weitgehenden Reduktion unterzogen und dann einer Schmelzzone oder einem Schmelzaggregat, insbesondere einem Einschmelzvergaser, zum Erschmelzen unter Zusatz von Kohlenstoffträgern und sauerstoffhältigem Gas unter Ausbildung eines Festbettes, zugeführt. Dabei wird ein Prozessgas gebildet und in die Reduktionszone eingeleitet. Zusätzlich zur Reduktionszone ist eine Vorwärmzone vorgesehen, in die die Einsatzstoffe und/oder Agglomerate eingebracht werden, wobei die Temperatur der Vorwärmzone und/oder der Reduktionszone derart gewählt werden bzw. wird, dass die Agglomerate in der Vorwärmzone oder alternativ in der Reduktionszone vollständig aushärten. Alternativ können die Agglomerate auch in die Schmelzzone eingebracht werden.

Dabei kann die die Vorwärmzone, die Reduktionszone und die Schmelzzone durch einen Hochofen gebildet werden. Weiters können diese auch durch getrennte Aggregate, bestehend aus Reduktionsaggregaten und einem oder mehreren Schmelzaggregaten, wie z.B. einem Einschmelzvergaser, gebildet werden, wobei eine gemeinsame Vorwärmzone oder mehrere, einzelnen Reduktionsaggregaten oder Schmelzaggregaten zugeordnete Vorwärmzonen ausgeprägt sind. Geeignete Verfahren für die Verwertung der erfindungsgemäßen Agglomerate sind Direktreduktionsverfahren, Schmelzreduktionsverfahren, wie Corex^{®} oder Finex^{®} oder auch eine Verwertung in einem Hochofen.

Damit wird die Härtung der Agglomerate zumindest zum Teil in das Verfahren verlegt, somit also in der Vorwärmzone durchgeführt. Vorab nötige Wärmebehandlungen der Agglomerate können deutlich verkürzt bzw. bei geringeren Temperaturen durchgeführt werden. Zudem wird dadurch etwa die Problematik von Ausgasungen aus den Agglomeraten beim Härten erheblich reduziert, sodass auch aufwendige Behandlungen von gasförmigen Stoffen oder Dämpfen, die aus den Agglomeraten austreten zum größten Teil wegfallen können.

Erfindungsgemäß beträgt der Anteil der Agglomerate in den Einsatzstoffen zumindest 30%. Es ist jedoch auch denkbar, dass der Anteil deutlich bis nahezu 100% gesteigert werden kann, sodass auch die Verarbeitung von sehr feinen Einsatzstoffen in großen Mengen möglich wird. Im Gegensatz zum Stand der Technik, wo nur geringe Anteile an feinen Einsatzstoffen verarbeitet werden können, wird durch das erfindungsgemäße Verfahren der Arbeitsbereich bzw. der Bereich verarbeitbarer Korngrößen deutlich erhöht. Damit wird ein wesentlich flexibleres Verfahren ermöglicht, da die Einsatzstoffe nunmehr nach Bedarf und verfügbaren Rohstoffen bzw. Rohstoffpreisen gewählt werden können.

Eine spezielle Ausgestaltung des erfindungsgemäßen Verfahrens sieht vor, dass die Reduktionszone zumindest eine, insbesondere 2 bis 4, Reduktionsstufen aufweist. Zusätzlich kann auch eine Vorwärmzone vorgesehen werden. Die Verwendung von mehreren Reduktionszonen hat sich als vorteilhaft herausgestellt. Die Reduktionszonen können durch Reduktionsaggregate gebildet werden, in denen das zu reduzierende Material im Gegenstrom zum Reduktionsgas geführt wird. Das Reduktionsgas wird in der Schmelzzone oder dem Schmelzaggregat gebildet und durch die Reduktionsaggregate geführt.

Eine weitere spezielle Ausgestaltung des erfindungsgemäßen Verfahrens sieht vor, dass zumindest zwei parallel geschaltete Reduktionszonen mit einer gemeinsamen oder mit je einer eigenen Vorwärmzone vorgesehen sind. Durch die Verwendung zweier parallel geschalteter Reduktionszonen kann die Reduktionskapazität erweitert bzw. nach Bedarf angepasst werden. Erfindungsgemäß werden die Einsatzstoffe vor dem Eintrag in die Vorwärmzone getrocknet.

Gegebenenfalls schließt sich an die Trocknung eine Härtung der Agglomerate an, wobei die Temperatur oberhalb der Trocknungstemperatur liegt. Insbesondere kann bei Verwendung von Melasse als Binder eine Karamellisierung vorzugsweise oberhalb von 250°C durchgeführt werden. Die bei der Trocknung und ggf. einer Härtung von den Agglomeraten aufgenommene fühlbare Wärme wird vorzugsweise unter Vermeidung von Kühlverlusten mit den Agglomeraten der Vorwärmzone zugeführt.

Nach einer besonderen Ausgestaltung des erfindungsgemäßen Verfahrens erfolgt zur Einstellung der Temperatur in der Vorwärmzone eine teilweise Verbrennung des Prozessgases in der Vorwärmzone.

Nach einer weiteren Ausgestaltung des erfindungsgemäßen Verfahrens erfolgt zur Einstellung der Temperatur in der Vorwärmzone eine zumindest teilweise Verbrennung eines in die Vorwärmzone eingeleiteten Brenngases oder es wird ein heißes Gas in die Vorwärmzone eingeleitet.

Durch die beschriebenen Maßnahmen kann die Temperatur der Vorwärmzone gezielt eingestellt werden.

Eine besondere Ausgestaltung des Verfahrens sieht vor, dass die Einsatzstoffe zunächst in eine feinteilchenförmige und eine grobe Fraktion oder mehrere grobe Fraktionen klassiert werden, wobei die grobe Fraktion bzw. die groben Fraktionen, gegebenenfalls nach einer Trocknung und/oder einer Zerkleinerung, unmittelbar und die feinteilchenförmige Fraktion nach Durchlaufen eines Agglomerationsverfahrens, gemäß einem der Ansprüche 1-17 in die Reduktionszone eingebracht wird bzw. werden. Alternativ oder ergänzend kann auch grobe Fraktion bzw. ein Teil der groben Fraktionen unmittelbar in die Schmelzzone eingebracht werden. Dadurch kann der Agglomerationsaufwand verringert werden, da nur die feinteilchenförmige Fraktion einer Agglomeration zugeführt werden muss. Eine Zerkleinerung erfolgt dann, wenn Partikelgrößen vorliegen, die nicht verarbeitet werden können.

Erfindungsgemäß werden die eine oder mehreren groben Fraktionen, gegebenenfalls nach der Trocknung, zerkleinert, insbesondere feingemahlen, und nach Durchlaufen eines Agglomerationsverfahrens, gemäß einem der Ansprüche 1-17 in die Reduktionszone eingebracht. Damit können auch grobe Fraktionen als Agglomerate verarbeitet und in die Reduktionszone eingebracht werden.

Gemäß einer vorteilhaften Ausgestaltung des erfindungsgemäßen Verfahrens durchlaufen die Einsatzstoffe vor einer Agglomeration gemäß einem der Ansprüche 1-17 eine Sortierung, wobei eine an Wertstoffen angereicherte und/oder an Schadstoffen abgereicherte Fraktion gebildet und diese Fraktion als Agglomerate der Reduktionszone zugeführt wird. Bereits durch die Klassierung können Wertstoffe angereichert und Schadstoffe abgereichert werden, sodass das Reduktionsverfahren effizienter betrieben und Schadstoffe vorweg abgetrennt werden können.

Nach einer speziellen Ausgestaltung des erfindungsgemäßen Verfahrens wird die Sortierung, unter Ausnutzung unterschiedlicher Dichten, Partikelgrößen und Partikelformen, Oberflächeneigenschaften, magnetischer Eigenschaften sowie der elektrischen Leitfähigkeit einzelner Inhaltsstoffe von Einsatzstoffen, insbesondere mittels Hydrozyklon, Setzmaschine, Schütteltisch, Schwertrübe, Flotation, Magnetscheidung oder elektrostatischer Scheidung durchgeführt. Mit derartigen Verfahren können Erzkonzentrate hergestellt werden.

Eine vorteilhafte Ausgestaltung des Verfahrens sieht vor, dass die Klassierung im Falle trockener Einsatzstoffe auf Basis einer ein- oder mehrstufigen Sichtung und im Falle feuchter Einsatzstoffe auf Basis einer Nasssiebung erfolgt. Damit können auch feuchte Einsatzstoffe problemlos verarbeitet werden.

Gemäß einer vorteilhaften Ausgestaltung des erfindungsgemäßen Verfahrens werden die feuchten Einsatzstoffe vor deren Agglomeration mechanisch und/oder thermisch getrocknet.

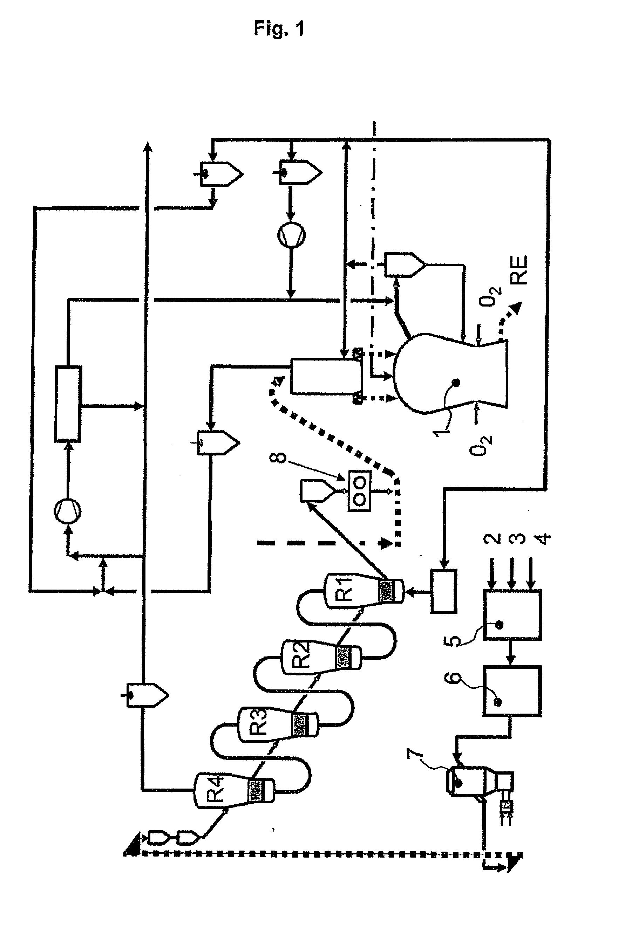

Die Erfindung wird in weiterer Folge beispielhaft anhand eines nicht einschränkenden Ausführungsbeispieles bzw. der Figur 1 beschrieben.

### Fig. 1: Anlage zur Durchführung der erfindungsgemäßen Verfahren

Figur 1 zeigt ein Schmelzaggregat 1, das eine Schmelzzone bildet. Das Schmelzaggregat ist als Einschmelzvergaser ausgebildet kann aber auch als Schachtofen oder als Schmelzbadofen ausgeführt sein. Das im Schmelzaggregat 1 gebildete Reduktionsgas wird in die Reduktionsaggregate R1 - R4 eingeleitet und im Gegenstrom zu den zu reduzierenden Einsatzstoffen geführt. Auf die in der Figur dargestellten Einrichtungen zur Behandlung des Reduktionsgases wird an dieser Stelle nicht näher eingegangen.

Feinkörnige Eisenträger 2, wie z.B. Eisenerze und/oder eisenhältige Stäuben und/oder Schlämme werden zusammen mit Zusatzstoffen 3 und Binder 4 gemischt, gegebenenfalls geknetet und in einer Misch- und Agglomerationseinrichtung 5 agglomeriert, insbesondere granuliert. In der Folge wird diese Mischung einer Einrichtung 6 zum Härten zugeführt, in der es durch Erhitzen zu einer Aushärtung des Binders kommt, sodass eine Festigkeitssteigerung in den Agglomeraten kommt. Dabei wird das Erhitzen und die Verweilzeit der Agglomerate in der Einrichtung 6 derart gesteuert, dass nur der Binder im Bereich der Randschicht der Agglomerate aushärtet. Die Misch- und Agglomerationseinrichtung 5 kann auch mehrstufig ausgebildet sein, sodass die erzeugten Agglomerate mit einer oder mehreren Schichten überzogen werden können. Damit können Agglomerate erzeugt werden, die einen schichtartigen Aufbau besitzen, wobei sich jede Schicht hinsichtlich Zusammensetzung und Binder unterscheiden kann. Vorteilhaft ist es, für die äußerste Schicht einen Binder zu wählen, der eine geringe Aushärtetemperatur bzw. Aushärtezeit aufweist, sodass die Härtung in der Einrichtung 6 bei geringeren Temperaturen und unter geringeren Härtezeiten erfolgen kann.

Nach der Behandlung in der Einrichtung 6 können die Agglomerate bei Bedarf noch in der Trocknungseinrichtung 7 getrocknet und der Feuchtegehalt gezielt eingestellt werden. Die Agglomerate werden in weiterer Folge einem Reduktionsaggregat R4 zugeführt, das als Vorwärmaggregat betrieben werden kann. Bevorzugt wird dabei die in den Agglomeraten infolge Trocknung enthaltene fühlbare Wärme in das Reduktionsaggregat eingebracht.

Im Vorwärmaggregat kommt es aufgrund der hohen Temperaturen von 400 bis 900°C zum Aushärten der Agglomerate auch in deren Inneren, sodass eine für den weiteren Prozess vorteilhafte hohe Festigkeit eingestellt werden kann. Eine finale Härtung der Agglomerate kann auch in der Reduktionszone erfolgen.

Derartige Agglomerate können nicht nur Reduktionsprozessen, Schmelzreduktionsprozessen und dem Hochofenprozess sondern jedem beliebigen metallurgischen Prozess, der Agglomerate verarbeitet, zugeführt werden. Vorteilhaft können die in den Reduktionsaggregaten R1 - R4 reduzierten Agglomerate einer weiteren Agglomerationseinrichtung 8 zugeführt werden, sodass wiederum Agglomerate in das Schmelzaggregat 1 eingebracht werden können. Auf diese Weise kann das Handling der Einsatzstoffe für das Schmelzaggregat, also dessen Transport, Förderung oder Lagerung verbessert werden.

### Bezugszeichenliste

- 1: Schmelzaggregat
- 2: Feinkörnige Eisenträger
- 3: Zusatzstoffe
- 4: Binder
- 5: Misch- und Agglomerationseinrichtung
- 6: Einrichtung zum Härten
- 7: Trocknungseinrichtung
- 8: Agglomerationseinrichtung
- R1-4: Reduktionsaggregate
- RE: Roheisen

## Patentansprüche

1. Verfahren zur Herstellung von Agglomeraten aus feinkörnigen Eisenträgern, insbesondere Eisenerzen und/oder Eisenerzkonzentrate und/oder eisenhältigen Stäuben und/oder Schlämmen, und zumindest einem Binder als Einsatzstoff für einen thermischen Prozess, insbesondere einem metallurgischen Prozess, wobei die Eisenträger mit dem Binder und gegebenenfalls Zusatzstoffen gemischt und agglomeriert werden, wobei die Agglomerate in zumindest einem weiteren Agglomerationsschritt mit einer Schicht, bestehend aus Eisenträgern und zumindest einem Binder, überzogen werden, **dadurch gekennzeichnet, dass** die Agglomerate derart erhitzt werden, dass der Binder im Bereich der Oberfläche der Agglomerate gehärtet wird, wobei der Binder der äußersten Schicht oder der äußeren Schichten eine geringere Aushärtetemperatur als der Binder im Inneren der Agglomerate aufweist.

2. Verfahren nach Anspruch 1, **dadurch gekennzeichnet, dass** die Agglomerate nach dem zumindest einen weiteren Agglomerationsschritt derart erhitzt werden, dass der Binder der äußersten oder der äußeren Schichten aushärtet.

3. Verfahren nach Anspruch 1 oder 2, **dadurch gekennzeichnet, dass** die Agglomerate vor dem weiteren Agglomerationsschritt gehärtet werden.

4. Verfahren nach einem der Ansprüche 1 bis 3, **dadurch gekennzeichnet, dass** die Agglomerate, insbesondere nach dem Aushärten, mit einer Beschichtung aus kohlenstoffhältigen Stoffen, Kalk, insbesondere Branntkalk, oder Stäuben aus der Agglomeration überzogen werden.

5. Verfahren nach einem der Ansprüche 1 bis 4, **dadurch gekennzeichnet, dass** die Eisenträger und der Binder und gegebenenfalls Zusatzstoffe vor dem Agglomerieren zur Verbesserung des Bindevermögens geknetet werden.

6. Verfahren nach einem der Ansprüche 1 bis 5, **dadurch gekennzeichnet, dass** die Eisenträger neben feinkörnigen Eisenerzen und/oder Stäuben und/oder Schlämmen auch körnige Anteile, insbesondere rezyklierte Agglomerate, aufweisen mit einer Korngröße von 0,1 bis 3mm, insbesondere 0,5 bis 1,5mm, wobei die körnigen Anteile als Keimbildner für die Bildung der Agglomerate dienen.

7. Verfahren nach einem der Ansprüche 1 bis 6, **dadurch gekennzeichnet, dass** die Agglomerate, insbesondere während oder nach der Agglomeration, getrocknet werden, insbesondere durch thermisches Trocknen und/oder Lagerung an der Luft.

8. Verfahren nach einem der Ansprüche 1 bis 7, **dadurch gekennzeichnet, dass** eine mechanische Entwässerung vor oder während der Agglomeration, insbesondere eine mechanische Entwässerung während einer Pressformgebung, erfolgt.

9. Verfahren nach einem der Ansprüche 1 bis 8, **dadurch gekennzeichnet, dass** die Agglomerate durch Granulieren oder Pelletieren hergestellt werden.

10. Verfahren nach einem der Ansprüche 1 bis 9, **dadurch gekennzeichnet, dass** die Stäube und/oder Schlämme eisen- und/oder kohlenstoffhältige Reststoffe aus der Stahlproduktion oder feingemahlene Kohlenstoffträger, insbesondere Anthrazit, Koks oder Petrolkoks, sind.

11. Verfahren nach einem der Ansprüche 1 bis 10, **dadurch gekennzeichnet, dass** die Eisenträger Sintererz, Erzkonzentrat, Unterkorn von Eisenerz, Rückgut oder Stäube aus einer Agglomeration sind.

12. Verfahren nach einem der Ansprüche 1 bis 11, **dadurch gekennzeichnet, dass** die Zusatzstoffe metallurgische Zuschläge, insbesondere Kalk und/oder Dolomit und/oder kohlenstoffhältige Zusatzstoffe zur Einstellung zumindest teilweise selbstreduzierender Agglomerate, sind.

13. Verfahren nach einem der Ansprüche 1 bis 12, **dadurch gekennzeichnet, dass** die Agglomerate einen Durchmesser von 0,5 bis 8mm, insbesondere 3 bis 6mm, aufweisen.

14. Verfahren nach einem der Ansprüche 1 bis 13, **dadurch gekennzeichnet, dass** als Binder anorganische Stoffe oder Mischungen davon, insbesondere gebrannter oder gelöschter Kalk oder Bentonite verwendet werden.

15. Verfahren nach einem der Ansprüche 1 bis 13, **dadurch gekennzeichnet, dass** als Binder organische Stoffe oder Mischungen davon, insbesondere Melasse, Produkte aus Ablaugen der Zellstoffgewinnung, Stärken oder auch langkettige Polyelektrolyte auf der Basis von Zellulose verwendet werden.

16. Verfahren nach einem der Ansprüche 1 bis 15, **dadurch gekennzeichnet, dass** die Eisenträger durch eine Klassierung in eine feinteilchenförmige und eine oder mehrere grobe Fraktionen getrennt und die feinteilchenförmige Fraktion, gegebenenfalls nach einer Trocknung, einer Agglomeration zugeführt wird, wobei die Klassierung in Form einer Sichtung oder einer Kombination aus Siebung und Sichtung erfolgt.

17. Verfahren nach Anspruch 16, **dadurch gekennzeichnet, dass** die eine oder mehreren groben Fraktionen, gegebenenfalls nach der Trocknung, zerkleinert, insbesondere feingemahlen, und einer Agglomeration zugeführt werden.

18. Verfahren zur Herstellung von flüssigem Roheisen oder flüssigen Stahlvorprodukten aus Einsatzstoffen, insbesondere Eisenerzen, gegebenenfalls Zusatzstoffen und Agglomeraten, gemäß einem der Ansprüche 1 bis 17, wobei die Einsatzstoffe in einer Reduktionszone einer weitgehenden Reduktion unterzogen und dann einer Schmelzzone oder einem Schmelzaggregat, insbesondere einem Einschmelzvergaser, zum Erschmelzen unter Zusatz von Kohlenstoffträgern und sauerstoffhältigem Gas unter Ausbildung eines Festbettes, zugeführt werden, wobei ein Prozessgas gebildet und in die Reduktionszone eingeleitet wird, **dadurch gekennzeichnet, dass** zusätzlich zur Reduktionszone eine Vorwärmzone vorgesehen ist, in die die Einsatzstoffe und/oder Agglomerate eingebracht werden, wobei die Temperatur der Vorwärmzone und/oder der Reduktionszone derart gewählt werden/wird, dass die Agglomerate in der Vorwärmzone oder in der Reduktionszone vollständig aushärten.

19. Verfahren nach Anspruch 18, **dadurch gekennzeichnet, dass** der Anteil der Agglomerate in den Einsatzstoffen zumindest 30% beträgt.

20. Verfahren nach Anspruch 18 oder 19, **dadurch gekennzeichnet, dass** die Reduktionszone zumindest eine, insbesondere 2 bis 4, Reduktionsstufen aufweist.

21. Verfahren nach einem der Ansprüche 18 bis 20, **dadurch gekennzeichnet, dass** zumindest zwei zueinander parallel geschaltete Reduktionszonen mit einer gemeinsamen oder mit je einer eigenen Vorwärmzone vorgesehen sind.

22. Verfahren nach einem der Ansprüche 18 bis 21, **dadurch gekennzeichnet, dass** die Einsatzstoffe vor dem Eintrag in die Vorwärmzone getrocknet werden.

23. Verfahren nach einem der Ansprüche 18 bis 22, **dadurch gekennzeichnet, dass** zur Einstellung der Temperatur in der Vorwärmzone eine teilweise Verbrennung des Prozessgases in der Vorwärmzone erfolgt.

24. Verfahren nach einem der Ansprüche 18 bis 23, **dadurch gekennzeichnet, dass** zur Einstellung der Temperatur in der Vorwärmzone eine zumindest teilweise Verbrennung eines in die Vorwärmzone eingeleiteten Brenngases erfolgt oder ein heißes Gas in die Vorwärmzone eingeleitet wird.

25. Verfahren nach einem der Ansprüche 18 bis 24, **dadurch gekennzeichnet, dass** die Einsatzstoffe zunächst in eine feinteilchenförmige und eine oder mehrere grobe Fraktionen klassiert werden, wobei die grobe Fraktion bzw. die groben Fraktionen, gegebenenfalls nach einer Trocknung und/oder einer Zerkleinerung, unmittelbar und die feinteilchenförmige Fraktion nach Durchlaufen eines Agglomerationsverfahrens, gemäß einem der Ansprüche 1-17 in die Reduktionszone eingebracht wird bzw. werden.

26. Verfahren nach Anspruch 25, **dadurch gekennzeichnet, dass** die eine oder mehreren groben Fraktionen, gegebenenfalls nach der Trocknung, zerkleinert, insbesondere feingemahlen, und nach Durchlaufen eines Agglomerationsverfahrens, gemäß einem der Ansprüche 1-17 in die Reduktionszone eingebracht wird bzw. werden.

27. Verfahren nach einem der Ansprüche 18 bis 26, **dadurch gekennzeichnet, dass** die Einsatzstoffe vor einer Agglomeration gemäß einem der Ansprüche 1-17 eine Sortierung durchlaufen, wobei eine an Wertstoffen angereicherte und/oder an Schadstoffen abgereicherte Fraktion gebildet und diese Fraktion als Agglomerate der Reduktionszone zugeführt wird.

28. Verfahren nach einem der Ansprüche 22 oder 23, **dadurch gekennzeichnet, dass** die Vorwärmzone von der oder den Reduktionszone(n) derart getrennt ist, dass eine Gasströmung zwischen den Zonen weitestgehend vermieden wird.

29. Verfahren nach Anspruch 27, **dadurch gekennzeichnet, dass** die Sortierung unter Ausnutzung unterschiedlicher Dichten, Partikelgrößen und Partikelformen, Oberflächeneigenschaften, magnetischer Eigenschaften sowie der elektrischen Leitfähigkeit einzelner Inhaltsstoffe von Einsatzstoffen, insbesondere mittels Hydrozyklon, Setzmaschine, Schütteltisch, Schwertrübe, Flotation, Magnetscheidung oder elektrostatischer Scheidung durchgeführt wird.

30. Verfahren nach einem der Ansprüche 25 bis 27, **dadurch gekennzeichnet, dass** die Klassierung im Falle trockener Einsatzstoffe auf Basis einer ein- oder mehrstufigen Sichtung und im Falle feuchter Einsatzstoffe auf Basis einer Nasssiebung erfolgt.

31. Verfahren nach Anspruch 30, **dadurch gekennzeichnet, dass** die feuchten Einsatzstoffe vor dessen Agglomeration mechanisch und/oder thermisch getrocknet werden.

## Claims

1. A process for producing agglomerates from fine-grained iron carriers, in particular iron ores and/or iron ore concentrates and/or iron-containing dusts and/or slurries, and at least one binder as a charge material for a thermal process, in particular a metallurgical process, the iron carriers being mixed with the binder and any additions and agglomerated, the agglomerates being coated with a layer, comprising iron carriers and at least one binder, in at least one further agglomeration step, **characterized in that** the agglomerates are heated in such a way that the binder is cured in the region of the surface of the agglomerates, the binder of the outermost layer or the outer layers having a lower curing temperature than the binder in the interior of the agglomerates.

2. Process according to Claim 1, **characterized in that**, after the at least one further agglomeration step, the agglomerates are heated in such a way that the binder of the outermost layer or the outer layers cures.

3. Process according to Claim 1 or 2, **characterized in that** the agglomerates are hardened before the further agglomeration step.

4. Process according to one of Claims 1 to 3, **characterized in that** the agglomerates are coated, in particular after the hardening, with a coating of carbon-containing materials, lime, in particular calcined lime, or dusts from the agglomeration.

5. Process according to one of Claims 1 to 4, **characterized in that**, before the agglomerating operation, the iron carriers and the binder and any additions are kneaded to improve the binding ability.

6. Process according to one of Claims 1 to 5, **characterized in that** the iron carriers comprise not only fine-grained iron ores and/or dusts and/or slurries but also granular fractions, in particular recycled agglomerates, with a grain size of 0.1 to 3 mm, in particular 0.5 to 1.5 mm, the granular fractions serving as nucleants for the forming of the agglomerates.

7. Process according to one of Claims 1 to 6, **characterized in that**, in particular during or after the agglomeration, the agglomerates are dried, in particular by thermal drying and/or storing in air.

8. Process according to one of Claims 1 to 7, **characterized in that** a mechanical dewatering operation takes place before or during the agglomeration, in particular mechanical dewatering during a press-forming operation.

9. Process according to one of Claims 1 to 8, **characterized in that** the agglomerates are produced by granulating or pelletizing.

10. Process according to one of Claims 1 to 9, **characterized in that** the dusts and/or slurries are iron- and/or carbon-containing remains from steel production or finely ground carbon carriers, in particular anthracite, coke or petroleum coke.

11. Process according to one of Claims 1 to 10, **characterized in that** the iron carriers are sintered ore, ore concentrate, undersized material of iron ore, returns or dusts from agglomeration.

12. Process according to one of Claims 1 to 11, **characterized in that** the additions are metallurgical additions, in particular lime and/or dolomite and/or carbon-containing additions for setting at least partially self-reducing agglomerates.

13. Process according to one of Claims 1 to 12, **characterized in that** the agglomerates have a diameter of 0.5 to 8 mm, in particular 3 to 6 mm.

14. Process according to one of Claims 1 to 13, **characterized in that** inorganic substances or mixtures thereof, in particular calcined or slaked lime or bentonite, are used as binders.

15. Process according to one of Claims 1 to 13, **characterized in that** organic substances or mixtures thereof, in particular molasses, products from spent liquors of pulp production, starches or else cellulose-based long-chain polyelectrolytes, are used as binders.

16. Process according to one of Claims 1 to 15, **characterized in that** the iron carriers are separated by classification into a fraction in the form of fine particles and one or more coarse fractions and the fraction in the form of fine particles is passed on to an agglomerating operation, possibly after drying, the classification taking place in the form of sifting or a combination of sifting and screening.

17. Process according to Claim 16, **characterized in that** the one or more coarse fractions are comminuted, in particular finely ground, possibly after drying, and are passed on to an agglomerating operation.

18. Process for producing liquid pig iron or liquid primary steel products from charge materials, in particular iron ores, possibly additions and agglomerates, according to one of Claims 1 to 17, the charge materials being subjected to a substantial reduction in a reducing zone and then fed to a smelting zone or a smelting unit, in particular a melt gasifier, for smelting with the addition of carbon carriers and oxygen-containing gas to form a fixed bed, a process gas being formed and introduced into the reducing zone, **characterized in that** also provided in addition to the reducing zone is a preheating zone, into which the charge materials and/or agglomerates are introduced, the temperature of the preheating zone and/or of the reducing zone being chosen such that the agglomerates completely harden in the preheating zone or in the reducing zone.

19. Process according to Claim 18, **characterized in that** the proportion of the agglomerates in the charge materials is at least 30%.

20. Process according to Claim 18 or 19, **characterized in that** the reducing zone has at least one, in particular 2 to 4, reducing stages.

21. Process according to one of Claims 18 to 20, **characterized in that** at least two reducing zones arranged in parallel with a common preheating zone or each with its own preheating zone are provided.

22. Process according to one of Claims 18 to 21, **characterized in that** the charge materials are dried before loading into the preheating zone.

23. Process according to one of Claims 18 to 22, **characterized in that**, to set the temperature in the preheating zone, a partial combustion of the process gas takes place in the preheating zone.

24. Process according to one of Claims 18 to 23, **characterized in that**, to set the temperature in the preheating zone, an at least partial combustion of a combustion gas introduced into the preheating zone takes place or a hot gas is introduced into the preheating zone.

25. Process according to one of Claims 18 to 24, **characterized in that** the charge materials are first classified into a fraction in the form of fine particles and one or more coarse fractions, the coarse fraction or the coarse fractions being introduced directly into the reducing zone, possibly after drying and/or comminution, and the fraction in the form of fine particles being introduced into the reducing zone after passing through an agglomeration process, according to one of Claims 1-17.

26. Process according to Claim 25, **characterized in that** the one or more coarse fractions are comminuted, in particular finely ground, possibly after drying, and introduced into the reducing zone after passing through an agglomeration process, according to one of Claims 1-17.

27. Process according to one of Claims 18 to 26, **characterized in that**, before an agglomerating operation according to one of Claims 1-17, the charge materials pass through a sorting operation, a fraction that is enriched with substances of value and/or depleted of harmful substances being formed and this fraction being fed to the reducing zone as agglomerates.

28. Process according to one of Claims 22 or 23, **characterized in that** the preheating zone is separated from the reducing zone or zones in such a way that a gas flow between the zones is avoided to the greatest extent.

29. Process according to Claim 27, **characterized in that** the sorting is carried out by making use of different densities, particle sizes and particle forms, surface properties, magnetic properties and the electrical conductivity of individual contents of charge materials, in particular by means of a hydrocyclone, jigging machine, vibrating table, dense medium, flotation, magnetic separation or electrostatic separation.

30. Process according to one of Claims 25 to 27, **characterized in that** the classification takes place on the basis of a single- or multi-stage sifting operation in the case of dry charge materials and on the basis of a wet sifting operation in the case of moist charge materials.

31. Process according to Claim 30, **characterized in that** the moist charge materials are mechanically and/or thermally dried before their agglomeration.

## Revendications

1. Procédé de fabrication d'agglomérats à partir de vecteurs de fer à grain fin, notamment de minerais de fer et/ou de concentrés de minerais de fer et/ou de poussières et/ou de boues contenant du fer, et d'au moins un liant, en tant que matière première pour un procédé thermique, notamment un procédé métallurgique, les vecteurs de fer étant mélangés avec le liant et éventuellement des additifs et agglomérés, les agglomérats étant revêtus lors d'au moins une étape d'agglomération supplémentaire avec une couche constituée de vecteurs de fer et d'au moins un liant, **caractérisé en ce que** les agglomérats sont chauffés de manière à ce que le liant durcisse dans la zone de la surface des agglomérats, le liant de la couche la plus extérieure ou des couches extérieures présentant une température de durcissement plus basse que le liant à l'intérieur des agglomérats.

2. Procédé selon la revendication 1, **caractérisé en ce que** les agglomérats sont chauffés après la ou les étapes d'agglomération supplémentaires de manière à ce que le liant des couches les plus externes ou des couches externes durcisse.

3. Procédé selon la revendication 1 ou 2, **caractérisé en ce que** les agglomérats sont durcis avant l'étape d'agglomération supplémentaire.

4. Procédé selon l'une quelconque des revendications 1 à 3, **caractérisé en ce que** les agglomérats sont revêtus, notamment après le durcissement, avec un revêtement à base de matières contenant du carbone, de craie, notamment de chaux vive, ou de poussières issues de l'agglomération.

5. Procédé selon l'une quelconque des revendications 1 à 4, **caractérisé en ce que** les vecteurs de fer et le liant et éventuellement les additifs sont malaxés avant l'agglomération pour améliorer la capacité de liaison.

6. Procédé selon l'une quelconque des revendications 1 à 5, **caractérisé en ce que** les vecteurs de fer comprennent en plus des minerais de fer à grain fin et/ou des poussières et/ou des boues également des fractions granulaires, notamment des agglomérats recyclés, d'une taille de grain de 0,1 à 3 mm, notamment de 0,5 à 1,5 mm, les fractions granulaires servant d'agent de nucléation pour la formation des agglomérats.

7. Procédé selon l'une quelconque des revendications 1 à 6, **caractérisé en ce que** les agglomérats sont séchés, notamment pendant ou après l'agglomération, notamment par séchage thermique et/ou stockage à l'air.

8. Procédé selon l'une quelconque des revendications 1 à 7, **caractérisé en ce qu'**une déshydratation mécanique a lieu avant ou pendant l'agglomération, notamment une déshydratation mécanique pendant un façonnage par compression.

9. Procédé selon l'une quelconque des revendications 1 à 8, **caractérisé en ce que** les agglomérats sont fabriqués par granulation ou pastillage.

10. Procédé selon l'une quelconque des revendications 1 à 9, **caractérisé en ce que** les poussières et/ou les boues sont des résidus contenant du fer et/ou du carbone issus de la production d'acier ou des vecteurs de carbone finement broyés, notamment de l'anthracite, du coke ou du coke de pétrole.

11. Procédé selon l'une quelconque des revendications 1 à 10, **caractérisé en ce que** les vecteurs de fer sont un minerai fritté, un concentré de minerai, un tamisat de minerai de fer, un matériau recyclé ou des poussières issues d'une agglomération.

12. Procédé selon l'une quelconque des revendications 1 à 11, **caractérisé en ce que** les additifs sont des additifs métallurgiques, notamment de la craie et/ou de la dolomite et/ou des additifs contenant du carbone pour la préparation d'agglomérats au moins partiellement autoréducteurs.

13. Procédé selon l'une quelconque des revendications 1 à 12, **caractérisé en ce que** les agglomérats présentent un diamètre de 0,5 à 8 mm, notamment de 3 à 6 mm.

14. Procédé selon l'une quelconque des revendications 1 à 13, **caractérisé en ce que** des matières inorganiques ou leurs mélanges, notamment de la craie brûlée ou éteinte ou de la bentonite, sont utilisés en tant que liant.

15. Procédé selon l'une quelconque des revendications 1 à 13, **caractérisé en ce que** des matières organiques ou leurs mélanges, notamment de la mélasse, des produits issus de la lixiviation pour l'obtention de cellulose, des amidons ou également des polyélectrolytes à chaîne longue à base de cellulose, sont utilisés en tant que liant.

16. Procédé selon l'une quelconque des revendications 1 à 15, **caractérisé en ce que** les vecteurs de fer sont séparés par classification en une fraction fine et une ou plusieurs fractions grossières, et la fraction fine, éventuellement après un séchage, est introduite dans une agglomération, la classification ayant lieu sous la forme d'un tri visuel ou d'une combinaison d'un tamisage et d'un tri visuel.

17. Procédé selon la revendication 16, **caractérisé en ce que** la ou les fractions grossières, éventuellement après le séchage, sont broyées, notamment broyées finement, et introduites dans une agglomération.

18. Procédé de fabrication de fer brut liquide ou de produits précurseurs d'acier liquides à partir de matières premières, notamment de minerais de fer, éventuellement d'additifs et d'agglomérats, selon l'une quelconque des revendications 1 à 17, les matières premières étant soumises à une réduction importante dans une zone de réduction, puis introduites dans une zone de fusion ou un appareil de fusion, notamment dans un gazogène à fusion, pour la fusion avec ajout de vecteurs de carbone et d'un gaz contenant de l'oxygène pour former un lit fixe, un gaz de procédé étant formé et conduit dans la zone de réduction, **caractérisé en ce qu'**en plus de la zone de réduction, une zone de préchauffage est prévue, dans laquelle les matières premières et/ou les agglomérats sont introduits, la température de la zone de préchauffage et/ou de la zone de réduction étant choisies de manière à ce que les agglomérats durcissement complètement dans la zone de préchauffage ou dans la zone de réduction.

19. Procédé selon la revendication 18, **caractérisé en ce que** la proportion des agglomérats dans les matières premières est d'au moins 30%.

20. Procédé selon la revendication 18 ou 19, **caractérisé en ce que** la zone de réaction comprend au moins une, notamment 2 à 4 étapes de réduction.

21. Procédé selon l'une quelconque des revendications 18 à 20, **caractérisé en ce qu'**au moins deux zones de réduction connectées l'une à l'autre en parallèle sont munies d'une zone de préchauffage commune ou individuelle.

22. Procédé selon l'une quelconque des revendications 18 à 21, **caractérisé en ce que** les matières premières sont séchées avant l'introduction dans la zone de préchauffage.

23. Procédé selon l'une quelconque des revendications 18 à 22, **caractérisé en ce qu'**une combustion partielle du gaz de procédé a lieu dans la zone de préchauffage pour l'ajustement de la température dans la zone de préchauffage.

24. Procédé selon l'une quelconque des revendications 18 à 23, **caractérisé en ce qu'**une combustion au moins partielle d'un gaz de combustion introduit dans la zone de préchauffage a lieu pour l'ajustement de la température dans la zone de préchauffage ou un gaz chaud est introduit dans la zone de préchauffage.

25. Procédé selon l'une quelconque des revendications 18 à 24, **caractérisé en ce que** les matières premières sont tout d'abord classées en une fraction fine et une ou plusieurs fractions grossières, la ou les fractions grossières, éventuellement après un séchage et/ou un broyage, étant introduites directement, et la fraction fine après passage dans un procédé d'agglomération selon l'une quelconque des revendications 1 à 17, dans la zone de réduction.

26. Procédé selon la revendication 25, **caractérisé en ce que** la ou les fractions grossières, éventuellement après le séchage, sont broyées, notamment broyées finement, et, après passage dans un procédé d'agglomération selon l'une quelconque des revendications 1 à 17, introduites dans la zone de réduction.

27. Procédé selon l'une quelconque des revendications 18 à 26, **caractérisé en ce que** les matières premières passent par un triage avant l'agglomération selon l'une quelconque des revendications 1 à 17, une fraction enrichie en matières de valeur et/ou appauvrie en contaminants étant formée et cette fraction étant introduite en tant qu'agglomérats dans la zone de réduction.

28. Procédé selon l'une quelconque des revendications 22 ou 23, **caractérisé en ce que** la zone de préchauffage est séparée de la ou des zones de réduction de manière à ce qu'un écoulement gazeux entre les zones soit autant que possible évité.

29. Procédé selon la revendication 27, **caractérisé en ce que** le triage est réalisé en utilisant différentes densités, tailles de particule et formes de particule, propriétés de surface, propriétés magnétiques, ainsi que la conductivité électrique de composants individuels des matières premières, notamment au moyen d'un hydrocyclone, d'un crible, d'une table vibrante, d'un milieu lourd, d'une flottation, d'une séparation magnétique ou d'une séparation électrostatique.

30. Procédé selon l'une quelconque des revendications 25 à 27, **caractérisé en ce que** la classification a lieu dans le cas de matières premières sèches par un tri visuel à une ou plusieurs étapes et dans le cas de matières premières humides par un tamisage humide.

31. Procédé selon la revendication 30, **caractérisé en ce que** les matières premières humides sont séchées mécaniquement et/ou thermiquement avant leur agglomération.
